Europäisches Patentamt

European Patent Office

Office européen des brevets

(11) Publication number: **0 499 715 A2**

# EUROPEAN PATENT APPLICATION

(21) Application number: **91122016.8**

(22) Date of filing: **20.12.91**

(51) Int. Cl.⁵: **H04N 9/79, H04N 7/12**

(30) Priority: **20.02.91 US 657029**

(43) Date of publication of application:
**26.08.92 Bulletin 92/35**

(84) Designated Contracting States:
**AT BE DE DK ES FR GB IT NL SE**

(71) Applicant: **SAMSUNG ELECTRONICS CO., LTD.**
**416 Maetan-Dong Kwonsun-Gu**
**Suwon-City Kyounggi-Do(KR)**

(72) Inventor: **Strolle, Christopher H.**
**275 Bickley Road**
**Glenside, Pennsylvania 19038(US)**

(74) Representative: **Patentanwälte Grünecker,**
**Kinkeldey, Stockmair & Partner**
**Maximilianstrasse 58**
**W-8000 München 22(DE)**

(54) **Spatial filter for improved VHS system.**

(57) A method and apparatus uses a spatial filter for a television recording and playback system using a spectral folding process, wherein the signal is modulated onto a folding carrier of $(f_h/2, f_v/2)$, for separating the two-dimensional image spectral domain of the television signal into first and second regions that are either passed or attenuated, the partition between the regions being selected such that every point in the passed region has a mirror point mirrored about $(f_h/4, f_v/4)$ in the attenuated region; and reconstructing the passed region after playback.

*FILTER IMPLEMENTATION*
*(GENERAL)*

*FIG. 3a*

The present invention relates to television systems and more particularly to television recording and playback systems.

A problem with television tape recording systems such as the VHS system, has been the limited bandwidth and the resulting image degradation compared with, for example, images reproduced with the full NTSC standards. In the IVHS (Improved VHS System), the horizontal bandwidth of the playback image is increased to at least the full NTSC bandwidth by spectrum folding of the signal portions above 2.5 MHz during recording and by a corresponding unfolding during playback. Using known frame-averaging techniques, the reconstructed playback image is properly reproduced when it is still, with no artifacts resulting from the folding and unfolding. However, when motion is present in the picture, temporal reconstruction does not work properly, resulting in numerous artifacts such as blurring and residual folding dots. In an endeavor to correct such effects of motion in the picture, a spatial process has been used known as edge adaptive interpolation, as described in U.S. Patent Application No. (AML Docket No. 1004), herein incorporated by reference. Nevertheless, such an approach is not as satisfactory as might be desired.

In accordance with an aspect of the invention, a method using a spatial filter for a television recording and playback system using a spectral folding process, wherein the signal is modulated onto a folding carrier of $(f_h/2, f_v/2)$, comprises:

separating the two-dimensional image spectral domain of the television signal into first and second regions that are either passed or attenuated,

the partition between the regions being selected such that every point in the passed region has a mirror point mirrored about $(f_h/4, f_v/4)$ in the attenuated region; and

reconstructing the passed region after playback.

In accordance with another aspect of the invention, a spatial prefilter is utilized in motion areas during recording and a high quality spatial reconstruction filter is utilized during playback in areas of motion.

In accordance with still another aspect of the invention, the prefilter removes unwanted diagonal frequency components present in the original image that otherwise interfere with the horizontal frequency components that get folded into the original signal during said spectral folding process.

In accordance with still yet another aspect of the invention, the reconstruction filter removes the unfolding artifacts that occupy the diagonal region to the playback spectrum of the unfolded image.

In accordance with a further aspect of the invention, apparatus using a spatial filter for a television recording and playback system using a spectral folding process, wherein the signal is modulated onto a folding carrier of $(f_h/2, f_v/2)$, comprises:

an arrangement for separating the two-dimensional image spectral domain of the television signal into first and second regions that are either passed or attenuated,

the partition between said regions being selected such that every point in the passed region has a mirror point mirrored about $(f_h/4, f_v/4)$ in the attenuated region; and

an arrangement for reconstructing the passed region after playback.

Figure 1a,1b,1c, and 1d show various exemplary configurations of separating spectral regions, in a two-dimensional image spectral domain representation;

Figures 2a, 2b, and 2c show spectral diagrams helpful to an understanding of the invention; and

Figures 3a, 3b and 4a, 4b show various signal processing arrangements in accordance with the invention.

In accordance with the present invention, the two-dimensional image spectrum is cleared symmetrically during the recording process. Thus, Fig. 1a shows the two-dimensional image spectral domain. In this representation, the vertical axis represent vertical frequencies and the horizontal axis represents temporal frequencies. This representation is conveniently used in the art area of the present invention. See, for example, the article by the present inventor, "cooperative Processing for Improved NTSC Chrominance/Luminance separation", Christopher H. Strolle, SMPTE Journal, August 1986; pp.782 - 789, herein incorporated by reference. This domain is separated into first and second regions that are either passed or attenuated, with the partition between the regions being selected such that every point in the passed region has a mirror point mirrored about $(f_h/4, f_v/4)$ in the attenuated region. If in the folding process referred to above, the signal is modulated onto folding carrier of $(f_h/2, f_v/2)$, there will be no overlap. Thus, the passed region can be properly reconstructed even after recording and playback limited to $f_h/4$, with the aliased attenuated region being fully eliminated.

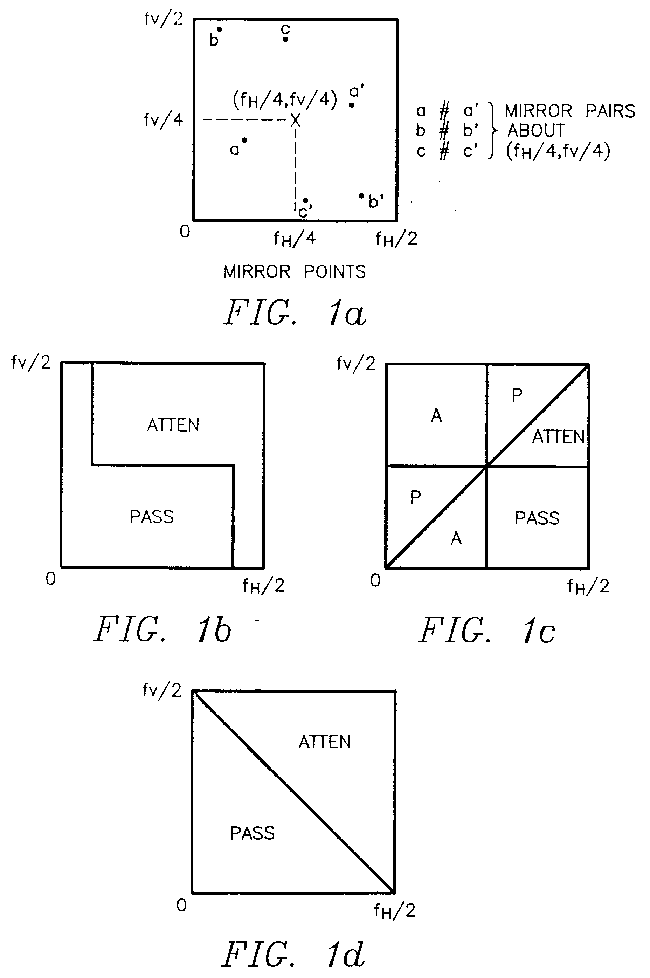

Figures 1b, 1c, and 1d respectively show various possible ways of apportioning the passed and attenuated regions. The selection of a particular configuration is subject to simplicity and economy of implementation as well as, to an extent, being dependent on human psychophysical visual sensitivity.

In accordance with a preferred embodiment of the invention, a high quality spatial prefilter is utilized in motion areas during recording and a high quality spatial reconstruction filter is utilized during playback in areas of motion. The function of the prefilter is to remove unwanted diagonal frequency components present in the original image that otherwise interfere with the horizontal frequency components that get folded into the original signal during the spectral folding process referred to above.

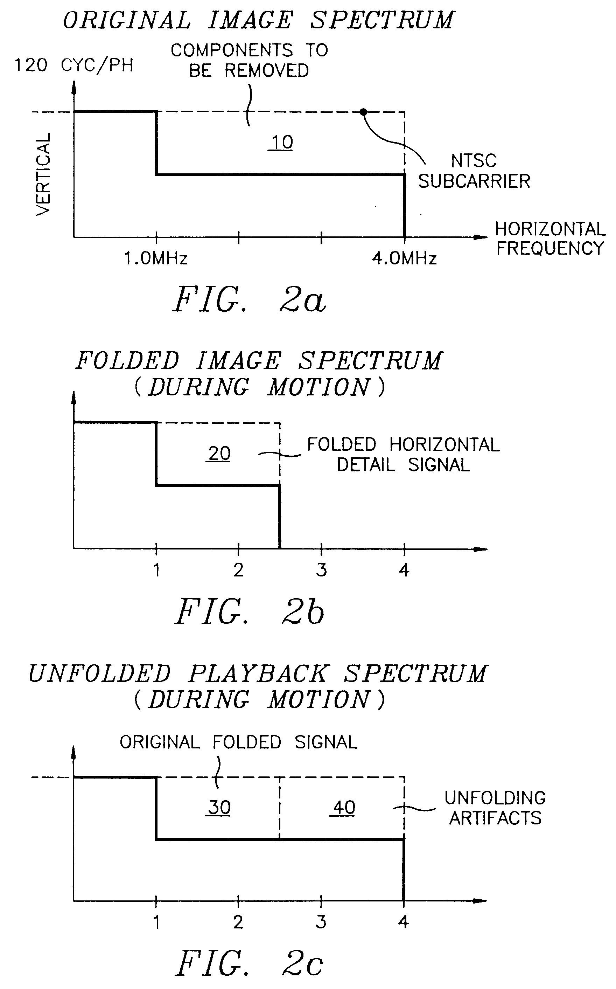

The reconstruction filter removes the unfolding artifacts that occupy the diagonal region to the playback spectrum of the unfolded image. Figure 2a shows the original image spectrum, the components to be removed being in the region marked 10. Figure 2b shows the folded image spectrum, with the folded horizontal detail signal being in the region marked 20. The unfolded playback spectrum is shown in Figure 2c. The original folded signal is the region marked 30 and the unfolding artifacts are in the region marked 40.

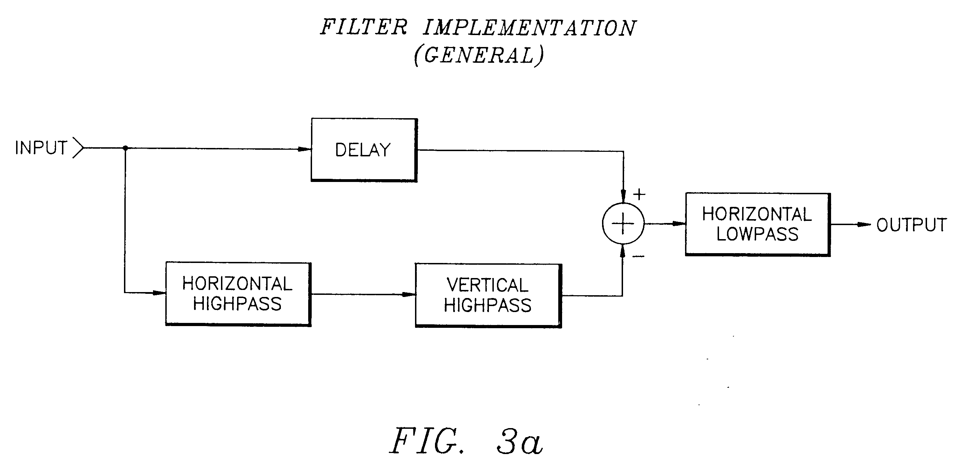

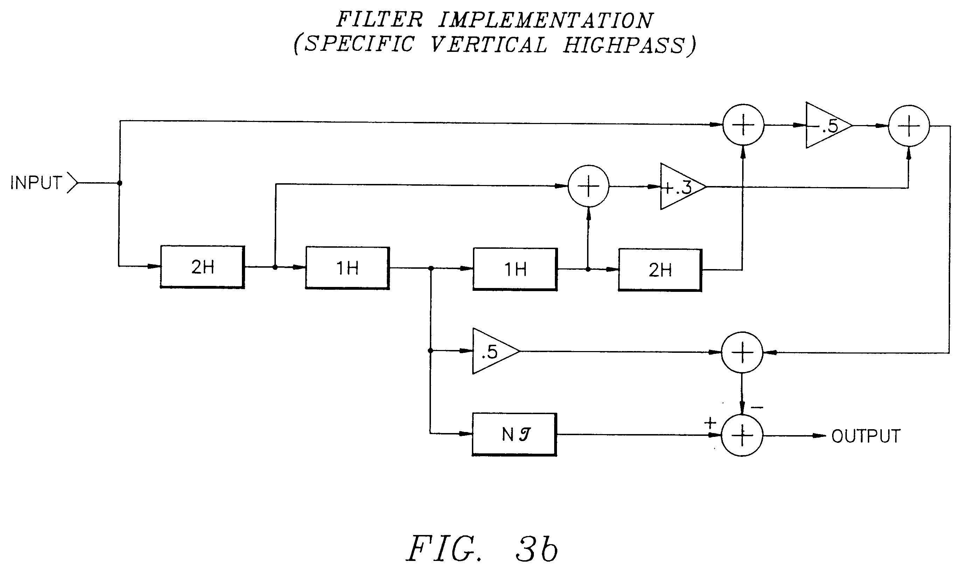

In the present implementation, the prefilter and the reconstruction filter are of the same type. In each case, the filter is a diagonal lowpass, but is implemented as two horizontal filters and a vertical filter, as shown in Figure 3.

In operation, the horizontal filter is a highpass, with a 6dB cutoff at about 0.8 to 1 MHz (about $0.1f_h$), for example. The output of the horizontal highpass is applied to the vertical filter. The vertical filter is a halfband highpass and so the output of the vertical filter provides the diagonal frequencies that are to be removed. These frequencies are then removed from the original input signal. The resulting signal is then filtered with a horizontal lowpass filter at about 4 - 4.2 MHz (about $0.9f_h$), thereby producing the desired diagonal lowpass function. The overall filter function is as shown, by way of example, in Figure 1b. It is noted that this filter performs on the record side as a chroma reject filter while preserving the horizontal detail. The present filter is preferred over a classical diagonal filter structure first, because the realization described is more efficient in terms of hardware realization and second, it is much more straightforward to adjust the cutoff response in such a separable filter than otherwise.

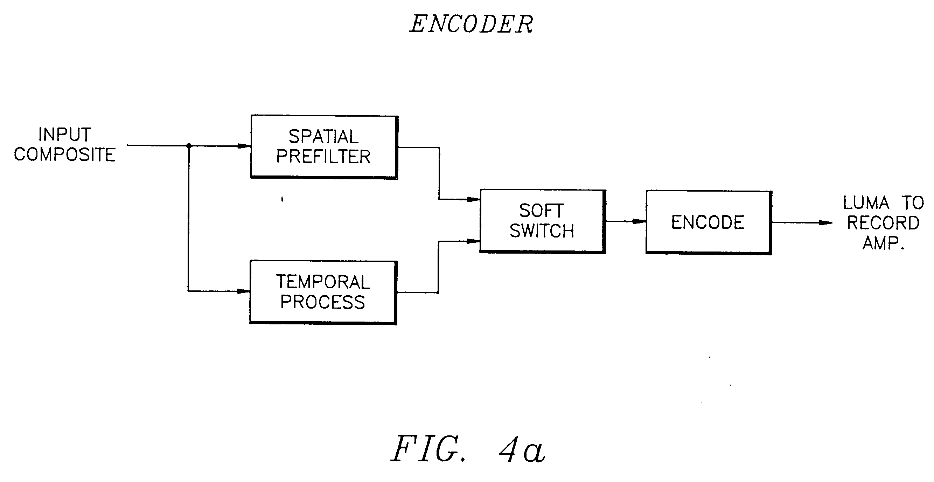

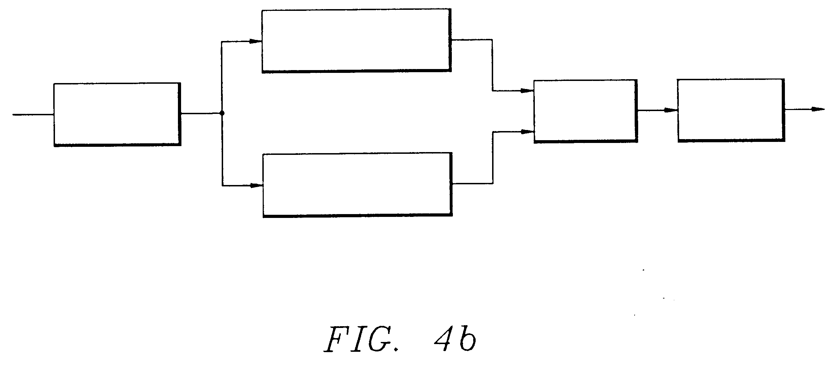

Figure 4 shows the incorporation of the filters into the environment of the IVHS system.

While the present invention has been described by way of exemplary embodiments, it will be understood by those skilled in the art that various changes can be introduced without departing from the spirit of the invention. It is thus, at least in principle, possible to implement various functions in digital or analog technology. It is also possible to vary the exact arrangement of the attenuated and passed regions.

**Claims**

1.  Method using a spatial filter for a television recording and playback system using a spectral folding process, wherein the signal is modulated onto a folding carrier of ($f_h$/2, $f_v$/2), said method comprising:

    separating the two-dimensional image spectral domain of the television signal into first and second regions that are either passed or attenuated,

    the partition between said regions being selected such that every point in the passed region has a mirror point mirrored about ($f_h$/4, $f_v$/4) in the attenuated region; and

    reconstructing the passed region after playback.

2.  A method in accordance with claim 1, wherein a spatial prefilter is utilized during recording in motion areas and a high quality spatial reconstruction filter is utilized during playback in areas of motion.

3.  A method in accordance with claim 2, wherein said prefilter removes unwanted diagonal frequency components present in the original image that otherwise interfere with the horizontal frequency components that get folded into the original signal during said spectral folding process.

4.  A method in accordance with claim 3, wherein said reconstruction filter removes the unfolding artifacts that occupy the diagonal region to the playback spectrum of the unfolded image.

5.  Apparatus using a spatial filter for a television recording and playback system using a spectral folding process, wherein the signal is modulated onto a folding carrier of ($f_h$/2, $f_v$/2), comprising:

    means for separating the two-dimensional image spectral domain of the television signal into first and second regions that are either passed or attenuated,

    the partition between said regions being selected such that every point in the passed region has a mirror point mirrored about ($f_h$/4, $f_v$/4) in the attenuated region; and

    means for reconstructing the passed region after playback.

6.  Apparatus in accordance with claim 5, comprising:

    a spatial prefilter utilized during recording and a high quality spatial reconstruction filter utilized during playback in areas of motion.

7.  Apparatus in accordance with claim 6, wherein said prefilter removes unwanted diagonal frequency components present in the original image that otherwise interfere with the horizontal frequency components that get folded into the original signal during said spectral folding process.

8. Apparatus in accordance with claim 7, wherein said reconstruction filter removes the unfolding artifacts that occupy the diagonal region to the playback spectrum of the unfolded image.

9. Apparatus in accordance with claim 8, wherein said prefilter and said reconstruction filter are of the same type.

10. Apparatus in accordance with claim 9, wherein each of said prefilter and said reconstruction filter is a diagonal lowpass, but is implemented as two horizontal filters and a vertical filter.

a # a' ⎫ MIRROR PAIRS
b # b' ⎬ ABOUT
c # c' ⎭ $(f_H/4, f_V/4)$

MIRROR POINTS

FIG. 1a

FIG. 1b

FIG. 1c

FIG. 1d

5

## ORIGINAL IMAGE SPECTRUM

FIG. 2a

## FOLDED IMAGE SPECTRUM (DURING MOTION)

FIG. 2b

## UNFOLDED PLAYBACK SPECTRUM (DURING MOTION)

FIG. 2c

## FILTER IMPLEMENTATION
## (GENERAL)

INPUT

DELAY

HORIZONTAL HIGHPASS

VERTICAL HIGHPASS

HORIZONTAL LOWPASS

OUTPUT

FIG. 3a

# FILTER IMPLEMENTATION
## (SPECIFIC VERTICAL HIGHPASS)

FIG. 3b

EP 0 499 715 A2

ENCODER

```
                    ┌──────────────┐
                    │   SPATIAL    │
                ┌──▶│   PREFILTER  │──┐
INPUT           │   └──────────────┘  │   ┌──────────┐   ┌──────────┐   LUMA  TO
COMPOSITE  ─────┤                     ├──▶│   SOFT   │──▶│  ENCODE  │──▶ RECORD
                │   ┌──────────────┐  │   │  SWITCH  │   └──────────┘    AMP.
                │   │   TEMPORAL   │  │   └──────────┘
                └──▶│   PROCESS    │──┘
                    └──────────────┘
```

*FIG.  4a*

EP 0 499 715 A2

FIG. 4b